# EUROPÄISCHE PATENTSCHRIFT

(11) **EP 1 357 299 B1**
(45) Veröffentlichungstag und Bekanntmachung des Hinweises auf die Patenterteilung: **13.07.2005**
(21) Anmeldenummer: 03009116.9
(22) Anmeldetag: 22.04.2003
(51) Int. Cl.: F15B 13/04, F16K 27/04, F16K 11/07, B29C 45/14

(54) **Pneumatisches Schieberventil mit einem zweiteiligen Ventilgehäuse aus Kunststoff**
Pneumatic spool valve with a two-part plastic housing
Vanne pneumatique à tiroir avec un boitier en plastique en deux parties

(30) Priorität: 26.04.2002 DE 10218759
(43) Veröffentlichungstag der Anmeldung: 29.10.2003
(73) Patentinhaber: Bosch Rexroth AG, 70442 Stuttgart (DE)
(72) Erfinder: Kulmann, Erwin, 71706 Markgröningen (DE)
(74) Vertreter: Maiwald Patentanwalts GmbH

(56) Entgegenhaltungen:
- EP-A- 0 637 708
- DE-A- 19 745 802
- DE-A- 19 748 345
- PATENT ABSTRACTS OF JAPAN vol. 1998, no. 12, 31. Oktober 1998 (1998-10-31) -& JP 10 184967 A (HITACHI CONSTR MACH CO LTD), 14. Juli 1998 (1998-07-14)

## Beschreibung

Die Erfindung betrifft ein pneumatisches Schieberventil zum Schalten eines Druckmittelflusses zwischen mehreren an einem Ventilgehäuse aus spritzgegossenem Kunststoff angeordneten äußeren Anschlüssen mittels eines Ventilsschiebers, der im Ventilgehäuse innerhalb einer korrespondierenden Schieberbohrung axial verschiebbar angeordnet ist, welche entlang ihrer axialen Erstreckung von mehreren einander beabstandet angeordneten und mit den äußeren Anschlüssen jeweils in Verbindung stehenden Druckmittelkammern unterbrochen ist.

Die Ventilgehäuse pneumatischer Schieberventile sind in allgemein bekannter Weise entweder mehrstückig oder einstückig aufgebaut. Mehrstückige Ventilgehäuse werden eingesetzt, um eine Montage der im Ventilgehäuse enthaltenen Bauteile zu vereinfachen. Hierfür sind diese mehrstückigen Ventilgehäuse meist in der Ebene des Ventilschiebers geteilt ausgeführt. Die beiden Gehäusestücke werden nach der Montage der innenliegenden Ventilbestandteile über eine Schraubverbindung miteinander verbunden, wobei eine dazwischen liegende Gehäusedichtung vorzusehen ist. Pneumatische Schieberventile mit einem derartigen mehrstückigem Ventilgehäuse sind jedoch recht breitlaufend, da eine gewisse Materialstärke als Anlagefläche für die Gehäusedichtung erforderlich ist.

Der Trend bei pneumatischen Schieberventilen geht jedoch zu immer geringeren Baubreiten, da mit schmalbauenden Einzelventilen der Aufbau einer insgesamt kompakten Ventileinheit möglich ist. Eine Ventileinheit besteht aus einer Mehrzahl solcher aneinander gereihter schmalbauender Einzelventile. Für die schmalbauenden Einzelventile haben sich einstückige Ventilgehäuse durchgesetzt, da hiermit eine extreme Baubreitenverringerung möglich ist, ohne dass im gleichen Zuge einer überproportionale Durchflussvemngerung verursacht wird. Allerdings erfordern solche einstückigen Ventilgehäuse nach ihrer Formgebung durch Spritzgießen einer anschließenden aufwendigen spanenden Nachbearbeitung, um insbesondere die innenliegende Ventilbohrung zur Aufnahme des Ventilschiebers zu fertigen, welche neben einer besonders glatten Oberfläche auch mit diversen Einlaufschrägen und abgerundeten Steuerkanten zu versehen ist.

Aus der DE 197 45 802 A1 ist ein gattungsgemäßes einstückiges Ventilgehäuse bekannt, bei dem der vorstehend aufgezeigte Nachteil dadurch behoben wird, dass zur Ausbildung der Schieberbohrung einzelne vorgefertigte Ventilbuchsen verwendet werden, welche zur Bildung des Ventilgehäuses mit Kunststoff umspritzt werden. Die einzelnen Ventilbuchsen weisen an ihrem Außenumfang zur axialen Fixierung jeweils mindestens eine ringförmige Aussparung oder eine zumindest bereichsweise ringförmige Erhebung auf, welche nach dem Umspritzen eine formschlüssige Verbindung mit dem Ventilgehäuse eingeht. Die einzelnen Ventilbuchsen bestehen hier aus Metall und werden vor dem Spritzgießen in die Spritzgießform eingelegt und von Werkzeugstempeln an ihren zukünftigen Bestimmungsorten fixiert. Nach dem Spritzgießen sind die Ventilbuchsen unlösbar, formschlüssig mit dem Ventilgehäuse verbunden. Die Anwendung dieser Inserttechnik zur Ausbildung einer Schieberbohrung mit Steuerkanten und Einlaufschrägen ermöglicht einstückige, einfach gestaltete Ventilgehäuse mit einer vergleichsweise hohen Durchflussrate. Eine spanende Nachbearbeitung ist hier nicht mehr erforderlich. Die integrierten Ventilbuchsen lassen sich in einer kostengünstigen, reproduzierbaren Massenproduktion fertigen. Ventilinterne Strömungsverhältnisse und Kanalgestaltungen müssen teilweise nicht mehr den Anforderungen an die Entformbarkeit geopfert werden.

In der Praxis hat sich jedoch herausgestellt, dass bei Dauerbelastung oder extremen Temperaturunterschieden ein Spiel zwischen den Ventilbuchsen und dem Ventilgehäuse entstehen kann, was die Funktionsweise des bekannten Schieberventils beeinträchtigt. Über einen im Extremfall entstehenden Spielspalt kann ungewollt Druckmittel zwischen benachbarten Druckmittelkammern überströmen. Um dieses zu verhindern ist bereits versucht worden, zwischen der Ventilbuchse und dem Ventilgehäuse ein Dichtelement in Form eines O-Ringes anzuordnen; allerdings kann es beim Umspritzen der Ventilbuchsen zur Herstellung des Ventilgehäuses im Einzelfall vorkommen, dass diese Dichtelemente aus ihrer Solllage gedrückt werden, was ebenfalls eine zuverlässige Reproduzierbarkeit der so hergestellten Ventilgehäuse verhindert. Weiterhin führt die Verwendung der Ventilbuchsen zu einer recht hohen Anzahl von Einzelteilen, was den Herstellungsaufwand des Ventilgehäuses entsprechend erhöht.

Es ist daher die Aufgabe der vorliegenden Erfindung ein pneumatisches Schieberventil der vorstehend beschriebenen Art dahingehend weiter zu verbessern, das eine zuverlässige Ventilfunktion selbst bei extremen Beanspruchungen des Schieberventils möglich ist, wobei das zum Einsatz kommende Ventilgehäuse einfach herstellbar sein soll.

Die Aufgabe wird ausgehend von einem pneumatischen Schieberventil gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die Druckmittelkammern sowie zumindest der im Bereich der Druckmittelkammern liegende Abschnitt der Schieberbohrung von einem durchgängigen Gehäuseinnenteil aus einem unverstärkten Kunststoff gebildet sind, das von einem aus demgegenüber verstärktem Kunststoff gebildeten Gehäuseaußenteil umspritzt ist, welches die geometrischen Außenabmessungen des Ventilgehäuses bestimmt.

Der Vorteil der Erfindung liegt insbesondere darin, dass für die unterschiedlichen mechanischen Anforderungen des Ventilgehäuses ein hiervon optimal angepasstes Material zum Einsatz gebracht wird. Die Laufflächen der Schieberbohrung weisen bei einer Herstellung aus unverstärktem Kunststoff eine besonders hohe Lebensdauer auf, da die Elastizität sowie die Oberflächengüte von unverstärktem Kunststoff sich für die mechanischen Anforderungen an die Schieberbohrung besonders gut eignet. Demgegenüber weist ein aus verstärktem Kunststoff bestehendes umschließendes Ventilgehäuses eine recht geringe Kriechneigung aufgrund der im verstärkten Kunststoff enthaltenen Füllstoffe auf, was für die Befestigung des Ventilgehäuses selbst an einem Trägerbauteil oder die Befestigung von peripheren Bestandteilen des Schieberventils am Ventilgehäuse von besonderem Vorteil ist. Gegenüber dem Einsatz mehrerer Ventilbuchsen zur Ausbildung der Schieberbohrung in Inserttechnik besteht das erfindungsgemäße Ventilgehäuse aus nur zwei Bauteilen. Beim Umspritzen des Gehäuseinnenteils sind daher die Maßnahmen zur Fixierung dieses einen Bauteils innerhalb der Spritzgießform weniger aufwendig als bei mehreren einzelnen Ventilbuchsen.

Weiterhin kann bei der infolge des Umspritzen stoffschlüssigen Verbindung zwischen dem Gehäuseinnenteil und dem Gehäuseaußenteil ein Spielspalt zwischen den beiden zu verbindenden Teilen ausgeschlossen werden. Der Stoffschluss wird direkt beim Umspritzen des Gehäuseinnenteils, also im selben Arbeitsgang, hergestellt und hier mit Formschluss kombiniert. In einfacher Weise lässt sich der dichtende Stoffschluss allein dadurch erreichen, dass die Materialien der beiden zu verbindenden Teile dieselbe Schmelztemperatur aufweisen. Ein Lösen des Gehäuseinnenteils innerhalb des erfindungsgemäß ausgebildeten Ventilgehäuses wird somit zuverlässig verhindert.

Gemäß einer weiteren die Erfindung verbessernden Maßnahme sind die zwischen den Druckkammern und den jeweils zugeordneten äußeren Anschlüssen liegenden Kanalabschnitte ebenfalls durch das Gehäuseinnenteil zumindest teilweise gebildet. Hierdurch lässt sich das Gehäuseinnenteil leichter mit dem Material des Gehäuseaußenteils umspritzen. Weiterhin findet der ventilinterne Druckluftfluss nur innerhalb des Gehäuseinnenteils statt, was zusätzlich etwaige Dichtheitsprobleme ausschließt.

Zur besseren Verbindung des Gehäuseaußenteils mit dem Gehäuseinnenteil wird vorgeschlagen, dass dieses zumindest an den umspritzten Stirnseiten spitzen- oder fahnenartige Anformungen geringer Materialstärke aufweist. Diese Anformungen erreichen während des Umspritzens wegen der geringen Materialstärke schnell ihre Schmelztemperatur, so dass hierüber zuverlässig die angestrebte stoffschlüssige Verbindung hergestellt werden kann. Versuche haben erwiesen, dass die spitzen- oder fahnenartigen Anformungen vorzugsweise in einem Winkel von 25 Grad bis 35 Grad auslaufen sollen. Die Ausbildung der Anformungen an den Stirnseiten des Gehäuseinnenteils gewährleisten neben der stoffschlüssigen Verbindung auch einen zusätzlichen Formschluss, so dass in Ergebnis dessen eine Verbindung von äußerster Stabilität entsteht.

Vorzugsweise besteht das umspritzte Gehäuseinnenteil aus einem Polyamid (PA). Das Gehäuseaußenteil besteht ebenfalls aus einem Polyamid (PA), das jedoch mit 30 bis 60 % Glasfasern verstärkt ist. Es hat sich herausgestellt, dass insbesondere Glasfasern als Füllstoff die vorstehend erläuterten gewünschten Eigenschaften des Gehäuseaußenteils bewirken können. Das zur Herstellung des Gehäuseinnenteils verwendete Polyamid ist jedoch nicht mit Glasfasern zu verstärken, da eine Zwangsentformung der hinterschnittartigen Einführgeometrie vorgesehen ist. Zwangsentformung mit glasfasergefülltem Polyamid (PA) ist nicht möglich, wenn eine ausreichende Einführungsgeometrie erreicht werden soll.

Diejenigen die Schieberbohrung bildenden Abschnitte des Gehäuseinnenteils, welche benachbart zu einer Druckkammer angeordnet sind, können mit Einlaufschrägen und/oder - radien versehen werden, die mit den auf dem Ventilschieber angeordneten Dichtringen zusammenwirken. Diese geometrischen Verhältnisse gewährleisten eine zuverlässige Führung der Dichtringe des Ventilschiebers beim Hin- und Herschalten des Ventilschiebers.

Zur Abdichtung der beiden äußeren Druckmittelkammern gegenüber dem Ventilgehäuse und der Atmosphäre können die beiden äußeren Dichtringe des Ventilschiebers ausnahmsweise mit jeweils einem Abschnitt der Ventilbohrung zusammenwirken, der im Gehäuseaußenteil ausgebildet ist. Versuche haben ergeben, dass die an dieser Stelle angeordneten und keiner Wechselbelastung ausgesetzten Dichtringe auch zuverlässig mit dem Material des Gehäuseaußenteils zusammenwirken können, ohne dass Undichtheiten entstehen.

Zur Erhöhung des Formschlusses kann das Gehäuseinnenteil mindestens eine außenradiale ringartige Aussparung oder Anformung aufweisen, die mit einer korrespondierenden Anformung bzw. Aussparung seitens des Gehäuseaußenteils zusammenwirkt. Diese formschlüssig ineinander greifenden Mittel erhöhen den Widerstand des Ventilgehäuses gegen die aufgrund der Schaltbewegung des Ventilschiebers entstehende Axialbelastung.

Das aus glasfaserverstärktem Kunststoff bestehende Gehäuseaußenteil eignet sich besonders gut zum Verschrauben mit einer korrespondierenden druckluftverteilenden Grundplatte einer Ventileinheit. Durch den Glasfaseranteil in dem Kunststoff wird das Material an einem Kriechen, das heißt einem langsamen plastischen Verformen bei Druckbeanspruchung, gehindert. Durch das aus dem verstärkten Kunststoff bestehende Ventilgehäuse verläuft zumindest eine Durchgangsbohrung zur Aufnahme einer zugeordneten Schraube, deren Druck das Ventilgehäuse widersteht.

Vorzugsweise ist mindestens ein zur axialen Verstellung des Ventilschiebers nach Art einer Vorsteuerung dienendes Pilotventil an dem Ventilgehäuse angebracht. Das Pilotventil dient der axialen Verstellung des Ventilschiebers, indem es einen Steuerdruck in eine zugeordnete Vorsteuerkammer in an sich bekannter Weise abgibt. Als weiteres peripheres Anbauteil kann mindestens ein Deckelelement oder dergleichen zum endseitigen Verschließen der Schieberbohrung und/oder Bildung der Vorsteuerkammer am Gehäuseaußenteil angebracht werden. Die Anbringung erfolgt vorzugsweise mittels selbstschneidender Schrauben, die in das Material des Ventilaußenteils eingeschraubt sind.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
Figur 1: einen seitlichen Längsschnitt durch ein pneumatisches Schieberventil mit einem zweiteiligen Ventilgehäuse aus Kunststoff, und
Figur 2: einen oberen Längsschnitt durch das Ventilgehäuse gemäß Figur 1.

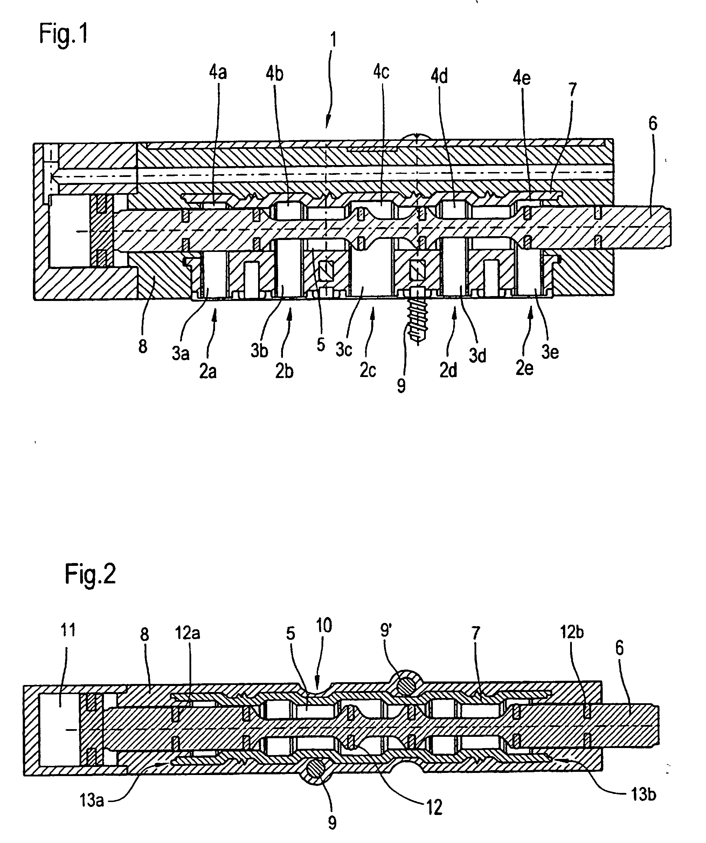

Nach Figur 1 weist das Ventilgehäuse 1 mehrere untenliegende äußere Anschlüsse 2a -2e auf, die über jeweils zugeordnete Kanalabschnitte 3a - 3e die Verbindung zu ventilinternen Druckmittelkammern 4a - 4e herstellen. Längs des Ventilgehäuses 1 erstreckt sich eine Schieberbohrung 5, in welcher ein Ventilschieber 6 axial verschiebbar angeordnet ist. Die Druckmittelkammern 4a - 4e sowie der im Bereich der Druckmittelkammern 4a - 4e liegende Abschnitt der Schieberbohrung 5 sind von einem durchgängigen Gehäuseinnenteil 7 aus einem unverstärkten Kunststoff gebildet. Die Kanalabschnitte 3a - 3e werden bis hin zu den äußeren Anschlüssen 2a - 2e ebenfalls von dem Gehäuseinnenteil 7 gebildet. Das Gehäuseinnenteil 7 besteht aus einem Polyamid (PA) und ist von einem glasfaserverstärktem Kunststoff gebildeten Gehäuseaußenteil 8 umspritzt. Das Gehäuseaußenteil 8 besteht hier ebenfalls aus Polyamid (PA), wobei der Anteil an Glasfasern in diesem Ausführungsbeispiel 50 % beträgt.

Die Befestigung des Ventilgehäuses 1 an eine - hier nicht weiter dargestellte - druckluftverteilende Grundplatte erfolgt über eine Schraubverbindung, wozu durch das aus dem verstärkten Kunststoff bestehende Gehäuseaußenteil 8 zwei Durchgangsbohrungen verlaufen, die je eine zugeordnete Schraube 9 aufnehmen. Die Schraube 9 wird in die mit den äußeren Anschlüssen zu 2a - 2e korrespondierende druckluftverteilende Grundplatte eingeschraubt, so dass eine Druckmittelverbindung zwischen der druckluftverteilenden Grundplatte und dem Ventilgehäuse 1 hergestellt ist.

Bezugnehmend auf Figur 2 weist das Gehäuseinnenteil 7 außenradiale ringartige Aussparungen 10 auf, die mit korrespondierenden Anformungen seitens des Gehäuseaußenteils 8 zusammenwirken, um aufgrund des hiermit bestehenden Formschlusses die axiale Belastbarkeit der Verbindung zwischen dem Gehäuseinnenteil 7 und dem Gehäuseaußenteil 8 zu erhöhen. Die Axialbelastung wird durch die endseitige Beaufschlagung des Ventilschiebers 6 über seine Vorsteuerkammer 11 erzeugt. Die Vorsteuerkammer 11 wird ausgehend von einem - hier nicht weiter dargestellten - Pilotventil mit einem Steuerdruck zur Axialverstellung des Schiebers 6 beaufschlagt. Die Rückbewegung des Ventilschiebers 6 erfolgt hier über eine Federrückstellung in an sich bekannter Weise. Diejenigen Abschnitte des Gehäuseinnenteils 7, welche die Schieberbohrung 5 bilden, sind zum optimalen Zusammenwirken mit den auf dem Ventilschieber 6 befestigten Dichtringen 12 mit Einlaufschrägen und -radien versehen. Da das Gehäuseinnenteil 7 nicht das gesamte Ventilgehäuse 1 durchzieht, dichten die beiden äußeren Dichtringe 12a, 12b des Ventilschiebers 6 gegenüber dem Gehäuseaußenteil 8, welches eine beidseitige Fortsetzung der Schieberbohrung 5 bildet. Zur besseren Verbindung des Gehäuseaußenteils 8 mit dem Gehäuseinnenteil 7 weist das Gehäuseinnenteil 7 an den umspritzten Stirnseiten 13a, 13b mehrere spitzenartige Anformungen geringer Materialstärke auf, welche beim Umspritzen des Gehäuseinnenteils 7 mit dem Kunststoff des Gehäuseaußenteils 8 verschmelzen und dichtet die Anschlüsse 2a-2e nach außen ab.

Das erfindungsgemäße zweiteilige Ventilgehäuse 1, welches nach der Herstellung einstückig ist, weist ein optimal an die unterschiedlichen mechanischen Anforderungen des Ventilgehäuses 1 angepasstes Material für definierte Bereiche des Ventilgehäuses 1 auf.

### Bezugszeichenliste

- **1**: Ventilgehäuse
- **2**: Äußerer Anschluss
- **3**: Kanalabschnitt
- **4**: Druckmittelkammer
- **5**: Schieberbohrung
- **6**: Ventilschieber
- **7**: Gehäuseinnenteil
- **8**: Gehäuseaußenteil
- **9**: Schraube
- **10**: Aussparung
- **11**: Vorsteuerkammer
- **12**: Dichtring
- **13**: Stirnseite

## Patentansprüche

1. Pneumatisches Schieberventil zum Schalten eines Druckluftflusses zwischen mehreren an einem Ventilgehäuse (1) aus spritzgegossenem Kunststoff angeordneten äußeren Anschlüssen (2a - 2e) mittels eines Ventilschiebers (6), der im Ventilgehäuse (1) innerhalb einer korrespondierenden Schieberbohrung (5) axial verschiebbar angeordnet ist, welche entlang ihrer axialen Erstreckung von mehreren einander beabstandet angeordneten und mit den äußeren Anschlüssen (2a - 2e) jeweils in Verbindung stehenden Druckmittelkammern (4a - 4e) unterbrochen ist,
**dadurch gekennzeichnet, dass** die Druckmittelkammern (4a - 4e) sowie zumindest der im Bereich der Druckmittelkammern (4a - 4e) liegende Abschnitt der Schieberbohrung (5) von einem durchgängigen Gehäuseinnenteil (7) aus einem unverstärkten Kunststoff gebildet sind, das von einem aus demgegenüber verstärktem Kunststoff gebildeten Gehäuseaußenteil (8) umspritzt ist, welches die geometrischen Außenabmessungen des Ventilgehäuses (1) bestimmt.

2. Pneumatisches Schieberventil nach Anspruch 1,
**dadurch gekennzeichnet, dass** die zwischen den Druckmittelkammern (4a - 4e) und den jeweils zugeordneten äußeren Anschlüssen (2a - 2e) liegenden Kanalabschnitte (3a - 3e) ebenfalls durch das Gehäuseinnenteil (7) zumindest teilweise gebildet sind.

3. Pneumatisches Schieberventil nach Anspruch 1,
**dadurch gekennzeichnet, dass** zur besseren Verbindung des Gehäuseaußenteils (8) mit dem Gehäuseinnenteil (7), dieses zumindest an den umspritzten Stirnseiten (13a, 13b) spitzen- oder fahnenartige Anformungen geringer Materialstärke aufweist.

4. Pneumatisches Schieberventil nach Anspruch 1,
**dadurch gekennzeichnet, dass** das umspritzte Gehäuseinnenteil (7) aus einem Polyamid (PA) besteht.

5. Pneumatisches Schieberventil nach Anspruch 4,
**dadurch gekennzeichnet, dass** das Gehäuseaußenteil (8) ebenfalls aus einem Polyamid (PA) besteht, das mit 30 bis 60 % Glasfasern verstärkt ist.

6. Pneumatisches Schieberventil nach Anspruch 1,
**dadurch gekennzeichnet, dass** diejenigen die Schieberbohrung (5) bildenden Abschnitte des Gehäuseinnenteils (7), welche benachbart zu einer Druckkammer (4a - 4e) angeordnet sind, mit Einlaufschrägen und/oder -radien versehen sind, die mit den auf dem Ventilschieber (6) angeordneten Dichtringen (12) zusammenwirken.

7. Pneumatisches Schieberventil nach Anspruch 1,
**dadurch gekennzeichnet, dass** zur Abdichtung der beiden äußeren Druckmittelkammern (4a und 4e) gegenüber dem Ventilgehäuse (1) die beiden äußeren Dichtringe (12a, 12b) des Ventilschiebers (6) mit jeweils einem Abschnitt der Schieberbohrung (5) zusammenwirkt, der im Gehäuseaußenteil (8) ausgebildet ist.

8. Pneumatisches Schieberventil nach Anspruch 1,
**dadurch gekennzeichnet, dass** außenradial am Gehäuseinnenteil (7) mindestens eine ringartige Aussparung (10) oder Anformung vorgesehen ist, die mit einer korrespondierenden Anformung bzw. Aussparung seitens des Gehäuseaußenteils (8) zusammenwirkt.

9. Pneumatisches Schieberventil nach einem der vorstehenden Ansprüche,
**dadurch gekennzeichnet, dass** die Befestigung des Ventilgehäuses (1) an eine druckluftverteilende Grundplatte über eine Schraubverbindung erfolgt, wozu durch das aus dem verstärkten Kunststoff bestehende Gehäuseaußenteil (8) zumindest eine Durchgangsbohrung zur Aufnahme einer zugeordneten Schraube (9) verläuft.

10. Pneumatisches Schieberventil nach einem der vorstehenden Ansprüche,
**dadurch gekennzeichnet, dass** mindestens ein zur axialen Verstellung des Ventilschiebers (6) nach Art einer Vorsteuerung dienendes Pilotventil am Gehäuseaußenteil (8) befestigt ist, dessen Steuerdruck in eine zugeordnete Vorsteuerkammer (11) im Ventilgehäuse (1) geführt ist.

## Claims

1. A pneumatic spool valve for switching a pressurized air flow between a plurality of external ports (2a - 2e) arranged at a valve housing (1) of injection-moulded plastic material by means of a valve slide (6) arranged to be axially slidable in the valve housing (1) within a corresponding slide bore (5) which is interrupted along its axial extension by a plurality of spaced pressure chambers (4a - 4e), each in connection with an external port (2a - 2e),
**characterised in that** said pressure chambers (4a - 4e) and at least the section of the slide bore (5) positioned in the area of the pressure chambers (4a - 4e) are formed by a contiguous inner housing member (7) of a non-reinforced plastic material which is surrounded by an outer housing member (8) of a plastic material reinforced, when compared to the other plastic material, and injection-moulded around it, which defines the geometric outer dimensions of the valve housing (1).

2. The pneumatic spool valve according to claim 1,
**characterised in that** the channel sections (3a - 3e) positioned between the pressure chambers (4a - 4e) and each corresponding external port (2a - 2e) are also at least partially formed by the inner housing member (7).

3. The pneumatic spool valve according to claim 1,
**characterised in that** for better bonding of the outer housing member (8) to the inner housing member (7), the latter has spike or lug-like protrusions of small material thickness at least at the end faces (13a, 13b) surrounded by injection-moulded material.

4. The pneumatic spool valve according to claim 1,
**characterised in that** the inner housing member (7) surrounded by injection-moulded material is of a polyamide (PA).

5. The pneumatic spool valve according to claim 4,
**characterised in that** the outer housing member (8) is also of a polyamide (PA) which is reinforced by 30% to 60% glass fibres.

6. The pneumatic spool valve according to claim 1,
**characterised in that** those sections of the inner housing member (7) forming the slide bore (5), which are adjacent to a pressure chamber (4a - 4e), are equipped with entry bevels and/or radii which cooperate with the sealing rings (12) arranged on the valve slide (6).

7. The pneumatic spool valve according to claim 1,
**characterised in that** for sealing the two outer pressure chambers (4a and 4e) with respect to the valve housing (1), each of the two outer sealing rings (12a, 12b) of the valve slide (6) cooperate with a section of said slide bore (5), which is formed in the outer housing member (8).

8. The pneumatic spool valve according to claim 1,
**characterised in that** radially on the outside of the inner housing member (7) at least one annular recess (10) or protrusion is provided which cooperates with a corresponding protrusion or recess, respectively, on the side of the inner housing member (8).

9. The pneumatic spool valve according to any one of the preceding claims,
**characterised in that** the valve housing (1) is attached on a pressurized-air distributing base plate via screw fastenings, wherein for this purpose at least one through bore extends through the outer housing member (8) of reinforced plastic material to receive an associated screw (9).

10. The pneumatic spool valve according to any one of the preceding claims,
**characterised in that** at least one pilot valve for the axial adjustment of the valve slide (6) in the manner of a relay valve is attached to the outer housing member (8), the control pressure of which is fed into an associated pilot chamber (11) in said valve housing (1).

## Revendications

1. Vanne à tiroir pneumatique pour commuter un débit d'air comprimé entre plusieurs raccords extérieurs (2a-2e) agencés sur un boîtier de soupape (1) en matière plastique coulée sous injection, au moyen d'un tiroir de vanne (6) qui est agencé avec possibilité de déplacement axial dans le boîtier de soupape (1) à l'intérieur d'un perçage de tiroir correspondant (5) qui est interrompu le long de son extension axiale par plusieurs chambres à fluide sous pression (4a-4e) agencées à distance les unes des autres et se trouvant respectivement en liaison avec les raccords extérieurs (2a-2e),
**caractérisée en ce que** les chambres à fluide sous pression (4a-4e) ainsi qu'au moins le tronçon du perçage de tiroir (5), se trouvant dans la région des chambres à fluide sous pression (4a-4e), sont formés par une partie intérieure de boîtier continue (7) en une matière plastique non renforcée, laquelle est enrobée par une partie extérieure de boîtier (8) formée contrairement à celui-ci en une matière plastique renforcée qui détermine les dimensions extérieures géométriques du boîtier de soupape (1).

2. Vanne à tiroir pneumatique selon la revendication 1, **caractérisée en ce que** les tronçons de canaux (3a-3e) disposés entre les chambres à fluide sous pression (4a-4e) et les raccords extérieurs (2a-2e) respectivement associés sont aussi formés au moins partiellement par la partie intérieure de boîtier (7).

3. Vanne à tiroir pneumatique selon la revendication 1, **caractérisée en ce que**, pour une meilleure liaison de la partie extérieure de boîtier (8) avec la partie intérieure de boîtier (7), celle-ci présente des conformations en forme de pointe ou de languette avec une faible épaisseur de matériau, au moins sur les faces frontales enrobées (13a, 13b).

4. Vanne à tiroir pneumatique selon la revendication 1, **caractérisée en ce que** la partie intérieure de boîtier enrobée (7) est constituée d'un polyamide (PA).

5. Vanne à tiroir pneumatique selon la revendication 4, **caractérisée en ce que** la partie extérieure de boîtier (8) est aussi constituée d'un polyamide (PA) qui est renforcé par 30% à 60% de fibres de verre.

6. Vanne à tiroir pneumatique selon la revendication 1, **caractérisée en ce que** ceux des tronçons de la partie intérieure de boîtier (7) qui forment le perçage de tiroir (5) et qui sont agencés voisins à une chambre à fluide sous pression (4a-4e), sont munis de pentes et/ou de rayons d'introduction qui coopèrent avec les bagues d'étanchéité (12) agencées sur le tiroir de vanne (6).

7. Vanne à tiroir pneumatique selon la revendication 1, **caractérisée en ce que**, pour étancher les deux chambres à fluide sous pression extérieures (4a-4e) par rapport au boîtier de soupape (1), les deux bagues d'étanchéité extérieures (12a, 12b) du tiroir de vanne (6) coopèrent respectivement avec un tronçon du perçage de tiroir (5) qui est réalisé dans la partie extérieure de boîtier (8).

8. Vanne à tiroir pneumatique selon la revendication 1, **caractérisée en ce que**, radialement à l'extérieur sur la partie intérieure de boîtier (7), il est prévu au moins une cavité (10) ou conformation annulaire qui coopère avec une conformation ou une cavité correspondante du côté de la partie extérieure de boîtier (8).

9. Vanne à tiroir pneumatique selon l'une des revendications précédentes, **caractérisée en ce que** la fixation du boîtier de soupape (1) a lieu via une liaison vissée sur une plaque de base qui répartit l'air comprimé, ce pourquoi au moins un perçage traversant destiné à recevoir une vis associée (9) traverse la partie extérieure de boîtier (8) constituée avec la matière plastique renforcée.

10. Vanne à tiroir pneumatique selon l'une des revendications précédentes, **caractérisée en ce qu'**au moins une vanne-pilote, servant au réglage axial du tiroir de vanne (6) à la manière d'une commande pilote, est fixée sur la partie extérieure de boîtier (8) et dont la pression de commande est conduite jusque dans une chambre pilote associée (11) dans le boîtier de soupape (1).
